# EUROPÄISCHE PATENTSCHRIFT

(11) **EP 3 377 370 B1**
(45) Veröffentlichungstag und Bekanntmachung des Hinweises auf die Patenterteilung: **05.07.2023**
(21) Anmeldenummer: 16785467.8
(22) Anmeldetag: 24.10.2016
(51) Int. Cl.: B60Q 3/64, B60Q 3/74, F21S 43/14, F21S 43/237, F21S 43/239, F21S 43/243, F21S 43/249, F21S 43/20, B60Q 3/54

(54) **BELEUCHTUNGSVORRICHTUNG FÜR EIN KRAFTFAHRZEUG**
ILLUMINATION DEVICE FOR A MOTOR VEHICLE
DISPOSITIF D'ÉCLAIRAGE POUR UN VÉHICULE AUTOMOBILE

(30) Priorität: 16.11.2015 DE 102015222505
(43) Veröffentlichungstag der Anmeldung: 26.09.2018
(73) Patentinhaber: Bayerische Motoren Werke Aktiengesellschaft, 80809 München (DE)
(72) Erfinder: BRUEGL, Juergen, 81669 Muenchen (DE)
(86) Internationale Anmeldenummer: PCT/EP2016/075494
(87) Internationale Veröffentlichungsnummer: WO 2017/084836

(56) Entgegenhaltungen:
- EP-A2- 2 407 709
- EP-A2- 2 607 774
- EP-A2- 2 816 276
- WO-A1-2014/179824
- CN-A- 104 235 726
- DE-A1-102010 030 660
- DE-A1-102011 016 402
- DE-A1-102012 107 437
- DE-A1-102012 109 898
- DE-A1-102012 112 152
- JP-A- 2015 082 443
- US-A1- 2015 198 319

## Beschreibung

Die Erfindung betrifft eine Beleuchtungsvorrichtung für ein Kraftfahrzeug.

Aus dem Stand der Technik sind Beleuchtungsvorrichtungen für Kraftfahrzeuge bekannt, welche mittels LED-Einheiten verschiedene Arten von Lichtverteilungen im Innenraum sowie auch außerhalb des Fahrzeugs generieren können.

Um eine gleichmäßige Lichtabstrahlung zu erreichen, werden in solchen Beleuchtungsvorrichtungen häufig plattenförmige Diffusoren aus lichtstreuendem Material eingesetzt, wobei das Licht der LED-Einheiten in Richtung der Dicke des Diffusors durch diesen hindurchgeht. Dabei ist jedoch zu beachten, dass ein ausreichender Abstand zwischen dem Diffusor und den LED-Einheiten einzuhalten ist, da ansonsten die einzelnen Leuchtpunkte der LED-Einheiten sichtbar werden, wodurch das Erscheinungsbild der generierten Lichtverteilung inhomogen wird. Aufgrund des vorzusehenden Abstands zwischen Diffusor und LED-Einheiten, der mindestens bei 50% des Abstands zwischen benachbarten LED-Einheiten liegen sollte, wird sehr viel Bauraum für die Beleuchtungsvorrichtung benötigt, so dass diese für viele Anwendungen im Kraftfahrzeug, wie z.B. als Ambiente- oder Kontur-Beleuchtung, wegen beengter Platzverhältnisse nicht bzw. sehr schwer einsetzbar ist.

Die Druckschrift EP 2 407 709 A2 offenbart eine Beleuchtungsvorrichtung für ein Kraftfahrzeug mit Lichtleitern. Dabei wird das Licht einer LED über eine Begrenzungsfläche eines jeweiligen Lichtleiters eingestrahlt und tritt über eine Stirnfläche des jeweiligen Lichtleiters wieder aus.

Die Druckschriften DE 10 2012 109 898 A1 und DE 10 2011 016 402 A1 offenbaren Beleuchtungsvorrichtungen für Kraftfahrzeuge, in denen lichtstreuende Materialien zum Einsatz kommen.

Die Druckschrift EP 2 816 276 A2 offenbart ein Kraftfahrzeug mit einer Leuchtvorrichtung, die einen Lichtleiter mit einer Einkoppelfläche und einer Auskoppelfläche umfasst. Die Auskoppelfläche ist an einer Stirnseite des Lichtleiters vorgesehen und enthält lichtstreuenden Kunststoff.

Aufgabe der Erfindung ist es, eine Beleuchtungsvorrichtung für ein Kraftfahrzeug mit geringen Abmessungen zu schaffen.

Diese Aufgabe wird durch die Beleuchtungsvorrichtung gemäß Patentanspruch 1 gelöst. Weiterbildungen der Erfindung sind in den abhängigen Ansprüchen definiert.

Die erfindungsgemäße Beleuchtungsvorrichtung ist für ein Kraftfahrzeug, wie z.B. einen PKW oder gegebenenfalls auch einen LKW oder ein Motorrad, vorgesehen. Sie umfasst eine oder mehrere LED-Einheiten, wobei eine jeweilige LED-Einheit ein oder mehrere LEDs umfasst. Je nach Ausführungsform können die LED-Einheiten RGB-LED-Einheiten mit einer roten, grünen und blauen LED und/oder RGBW-LED-Einheiten mit einer roten, grünen, blauen und weißen LED sowie gegebenenfalls auch Weißlicht-LED-Einheiten mit einer einzelnen weißen LED oder Einfarb-LED-Einheiten mit einer einzelnen farbigen LED umfassen. In einer bevorzugten Ausführungsform kommen LED-Einheiten vom Typ APA10x bzw. WS281x und deren technische Weiterentwickungen zum Einsatz. Jedoch können ggf. auch andere LEDs verwendet werden.

In der erfindungsgemäßen Beleuchtungsvorrichtung ist ferner ein plattenförmiger Diffusor mit einer ersten und einer zweiten Begrenzungsfläche vorgesehen. Zwischen diesen Begrenzungsflächen befindet sich ein lichtstreuendes Material mit einer vorgegebenen Dicke. Die erste und zweite Begrenzungsfläche liegen somit in der flächigen Ausdehnung des Diffusors. Der Begriff des plattenförmigen Diffusors ist dabei weit zu verstehen, d.h. der Diffusor muss nicht zwangsläufig eine ebene Platte umfassen, sondern er kann auch als eine beliebig gebogene oder gewellte Platte ausgestaltet sein. In einer bevorzugten Variante liegt die vorgegebene Dicke im Bereich zwischen 1 mm und 5 mm.

Die erfindungsgemäße Beleuchtungsvorrichtung weist einen plattenförmigen Diffusor aus lichtstreuendem Material mit einer ersten und zweiten Begrenzungsfläche und einer Stirnfläche des Diffusors auf. Die Stirnfläche des Diffusors, die zwischen der ersten und zweiten Begrenzungsfläche vorgesehen ist, die für einen Betrachter sichtbare Lichtaustrittsfläche und insbesondere die einzige sichtbare Lichtaustrittsfläche der Beleuchtungsvorrichtung bildet. Darüber hinaus ist die LED-Einheit bzw. sind die LED-Einheiten benachbart zur ersten Begrenzungsfläche angeordnet und strahlen im Betrieb Licht in Richtung hin zu der ersten Begrenzungsfläche ab. Dieses Licht tritt über die erste Begrenzungsfläche in den Diffusor ein. Das Licht der LED-Einheit bzw. der LED-Einheiten strahlt vorzugsweise direkt auf die erste Begrenzungsfläche, d.h. das Licht passiert keine optischen Bauteile zwischen der LED-Einheit bzw. den LED-Einheiten und der ersten Begrenzungsfläche. In einer besonders bevorzugten Variante haben die LED-Einheit oder LED-Einheiten einen Abstand von 10 mm oder weniger von der ersten Begrenzungsfläche. Vorzugsweise liegen die LED-Einheit bzw. die LED-Einheiten an der ersten Begrenzungsfläche an.

Der Diffusor der erfindungsgemäßen Beleuchtungsvorrichtung ist derart ausgestaltet und angeordnet, dass zumindest ein Teil des über die erste Begrenzungsfläche eintretenden Lichts der LED-Einheit oder LED-Einheiten im Diffusor bis zu der Lichtaustrittsfläche geleitet wird und dort aus der Beleuchtungsvorrichtung austritt. Die Lichtleitung im Diffusor erfolgt dabei über Reflexionen an der ersten und zweiten Begrenzungsfläche.

Die erfindungsgemäße Beleuchtungsvorrichtung weist den Vorteil auf, dass durch einen Lichtaustritt an einer Stirnfläche des Diffusors und damit in anderer Richtung als der Lichteintritt eine sehr kompakte Bauweise der Beleuchtungsvorrichtung erreicht wird. Die Beleuchtungsvorrichtung kann somit auch in Bereichen des Kraftfahrzeugs verbaut werden, in denen beengte Platzverhältnisse vorliegen, wie z.B. in Türverkleidungen, Instrumententafeln, Mittelkonsolen und dergleichen. Durch die Lichtverteilung im Diffusor wird ferner die Generierung einer homogenen Lichtverteilung erreicht.

In einer besonders bevorzugten Ausführungsform sind für die LED-Einheit bzw. LED-Einheiten eine Hauptstrahlrichtung vorgegeben, bezogen auf welche die jeweilige LED-Einheit symmetrisch Licht abstrahlt. Vorzugsweise ist die Hauptstrahlrichtung einer jeweiligen LED-Einheit im Wesentlichen senkrecht zur ersten Begrenzungsfläche am Ort des Eintritts des Lichts der jeweiligen LED-Einheit in die erste Begrenzungsfläche.

In einer weiteren Variante der erfindungsgemäßen Beleuchtungsvorrichtung umfasst der plattenförmige Diffusor eine weitere Stirnfläche, welche an einem entfernt zu der Lichtaustrittsfläche liegenden Ende des Diffusors angeordnet ist, wobei die LED-Einheit oder LED-Einheiten benachbart zu der weiteren Stirnfläche angeordnet sind. Auf diese Weise wird sichergestellt, dass das Licht im Diffusor einen langen Weg zurücklegt, so dass die generierte Lichtverteilung an der Lichtaustrittsfläche besonders homogen ist.

In einer weiteren, besonders bevorzugten Variante der erfindungsgemäßen Beleuchtungsvorrichtung stellt der Diffusor einen Streifen dar und die Lichtaustrittsfläche ist eine Längskante des Streifens, wobei die Beleuchtungsvorrichtung vorzugsweise mehrere LED-Einheiten umfasst, welche in Richtung der Längsrichtung des Streifens nebeneinander angeordnet sind. Je nach verwendeten LED-Einheiten können diese mit unterschiedlicher Packungsdichte und damit unterschiedlichem Abstand zueinander entlang des Streifens positioniert sein. Insbesondere können Packungsdichten je nach LED-Baugröße von z.B. 144 - 367 LED-Einheiten pro Meter erreicht werden, was einem Abstand der LED-Einheiten von etwa 7 mm und weniger entspricht. Die Packungsdichten können jedoch auch geringer sein und beispielsweise bei 72 oder 60 oder 30 LED-Einheiten pro Meter liegen.

In einer besonders bevorzugten Variante der soeben beschriebenen Ausführungsform liegt die Breite des als Streifen ausgebildeten Diffusors zwischen 40% und 250%, insbesondere zwischen 50% und 200%, des (konstanten) Abstands zwischen benachbarten LEDs. Je größer die Breite des Streifens ist, desto homogener ist die erzeugte Lichtverteilung.

In einer weiteren Ausgestaltung der erfindungsgemäßen Beleuchtungsvorrichtung ist an der zweiten Begrenzungsfläche des Diffusors zumindest in dem Bereich, welcher der oder den LED-Einheiten gegenüberliegt, ein optischer Reflektor angeordnet. Auf diese Weise werden die Lichtverluste im Diffusor gering gehalten. Der optische Reflektor kann gegebenenfalls ein Teil einer Verkleidung des Kraftfahrzeugs sein. Ferner kann der Reflektor gegebenenfalls auch die gesamte zweite Begrenzungsfläche abdecken.

Die erfindungsgemäße Beleuchtungsvorrichtung kann je nach Ausgestaltung eine Innenraumbeleuchtung im Kraftfahrzeug oder auch eine Außenbeleuchtung an der Außenseite des Kraftfahrzeugs sein. Demzufolge kann der soeben beschriebene Reflektor beispielsweise Teil einer Innenraumverkleidung des Kraftfahrzeugs sein.

In einer weiteren Variante der Erfindung sind die LED-Einheit oder LED-Einheiten auf einer Wärmeableitung, z.B. einem Kühlkörper, angeordnet. Hierdurch wird eine effiziente Abfuhr der durch die LED-Einheiten erzeugten Wärme auch bei kleinem Bauraum gewährleistet.

In einer weiteren Variante umfasst die erfindungsgemäße Beleuchtungsvorrichtung mehrere LED-Einheiten, welche auf einer gemeinsamen Leiterplatte bzw. Leiterbahn angeordnet sind. Im Falle, dass eine Wärmeableitung vorgesehen ist, kann diese beispielsweise auf einer Seite der gemeinsamen Leiterbahn ausgebildet sein.

In einer weiteren Variante umfasst die erfindungsgemäße Beleuchtungsvorrichtung ferner einen stabförmigen Lichtleiter, z.B. einen zylindrischen Lichtleiter. Dabei sind an einem oder beiden Enden des stabförmigen Lichtleiters eine oder mehrere Lichtquellen, z.B. LEDs, zur Einspeisung von Licht in den stabförmigen Lichtleiter vorgesehen. Das eingespeiste Licht tritt entlang der Längsrichtung des stabförmigen Lichtleiters aus diesem aus und der stabförmige Lichtleiter ist derart am Diffusor angeordnet, dass das aus ihm austretende Licht in den Diffusor eintritt und dort zur Lichtaustrittsfläche geleitet wird. Diese Variante der Erfindung ermöglicht eine zusätzliche Generierung von Licht mittels eines stabförmigen Lichtleiters. Mit einer derartigen Beleuchtungsvorrichtung können viele unterschiedliche Lichteffekte erzeugt werden. Insbesondere kann über den stabförmigen Lichtleiter Weißlicht generiert werden, welches dann mit geeigneten farbigen Animationen überlagert wird, die mit den LED-Einheiten benachbart zur ersten Begrenzungsfläche generiert werden.

In einer bevorzugten Variante der soeben beschriebenen Ausführungsform ist zumindest eine Lichtquelle, welche an einem Ende des stabförmigen Lichtleiters Licht einspeist, über ein Schnittstellen-Modul an einen Kraftfahrzeug-Datenbus angebunden, wobei sich am Ort des Schnittstellen-Moduls ferner ein Verarbeitungsmodul befindet, welches mit der oder den LED-Einheiten elektrisch verbunden ist und ebenfalls an den Kraftfahrzeug-Datenbus angebunden ist. Hierdurch wird der Aufbau der erfindungsgemäßen Beleuchtungsvorrichtung stark vereinfacht. Der Kraftfahrzeug-Datenbus ist vorzugsweise ein LIN-Bus (LIN = Local Interconnect Network). Gegebenenfalls kann der Kraftfahrzeug-Datenbus auch ein CAN-Bus (CAN = Controller Area Network) oder ein anderer Datenbus sein.

In einer weiteren Variante der erfindungsgemäßen Beleuchtungsvorrichtung umfassen die LED-Einheit oder LED-Einheiten jeweils eine integrierte Schaltung zur Ansteuerung des oder der LEDs der jeweiligen LED-Einheit. Vorzugsweise sind die LEDs und die integrierte Schaltung dabei in einem gemeinsamen Gehäuse untergebracht, so dass die LED-Einheiten sehr kompakt sind. Insbesondere können die LED-Einheiten den oben genannten Typen APA10x bzw. WS281x und deren technischen Weiterentwickungen entsprechen.

In einer weiteren Variante umfasst die erfindungsgemäße Beleuchtungsvorrichtung mehrere LED-Einheiten, welche über einen internen Datenbus mit einem gemeinsamen Verarbeitungsmodul gekoppelt sind, wobei das Verarbeitungsmodul zur Kopplung an einen Kraftfahrzeug-Datenbus und insbesondere an einen LIN-Datenbus eingerichtet ist, um erste digitale Steuerbefehle zum Betrieb der Beleuchtungsvorrichtung von dem Kraftfahrzeug-Datenbus zu empfangen und als zweite digitale Steuerbefehle auf den internen Datenbus zu geben, und wobei die LED-Einheiten dazu eingerichtet sind, ihren LEDs Strom aus einer Spannungsversorgung basierend auf den zweiten digitalen Steuerbefehlen auf dem internen Datenbus mittels der integrierten Schaltungen zuzuführen.

In einer bevorzugten Variante der soeben beschriebenen Ausführungsform ist der interne Datenbus ein SPI-Datenbus (SPI = Serial Protocol Interface). Das Verarbeitungsmodul kann dabei derart ausgestaltet sein, dass die ersten digitalen Steuersignale mittels Software-SPI und/oder Hardware-SPI auf den SPI-Bus gegeben werden. Die Software-SPI-Methode ist an sich aus dem Stand der Technik bekannt und ermöglicht mittels einer Programmbibliothek ein ausführbares Programm auf dem entsprechenden Verarbeitungsmodul zu erzeugen, mit dem jedes Pin des Verarbeitungsmoduls als SPI-Pin zur Verbindung mit Leitungen des SPI-Busses konfiguriert werden kann. Mit anderen Worten werden bei der Verwendung von Software-SPI herkömmliche I/O-Pins als SPI-Pins konfiguriert. Im Gegensatz dazu sind bei der Verwendung von Hardware-SPI dedizierte PINs des Verarbeitungsmoduls zur Anbindung an den SPI-Bus vorgesehen.

Anstatt eines SPI-Datenbusses kann als interner Datenbus auch ein differentieller Datenbus verwendet werden, wobei sich ein differentieller Datenbus dadurch auszeichnet, dass digitale Daten über eine Spannungsdifferenz zwischen zwei Leitungen codiert werden. In einer Variante wird als differentieller Datenbus der an sich bekannte APIX-Bus (APIX = Automotive Pixel Link) verwendet.

In einer weiteren Variante der obigen Ausführungsform sind die LED-Einheiten jeweils dazu eingerichtet, der oder den LEDs der jeweiligen LED-Einheit Strom aus der Spannungsversorgung über PWM-Modulation zuzuführen. Gegebenenfalls kann der Strom aus der Spannungsversorgung auch über die Einstellung variabler Strompegel zugeführt werden.

Neben der soeben beschriebenen Beleuchtungsvorrichtung betrifft die Erfindung ein Kraftfahrzeug, insbesondere einen PKW oder gegebenenfalls auch einen LKW oder ein Motorrad, das eine oder mehrere der erfindungsgemäßen Beleuchtungsvorrichtungen bzw. bevorzugter Varianten dieser Beleuchtungsvorrichtungen umfasst.

Ausführungsbeispiele der Erfindung werden nachfolgend anhand der beigefügten Figuren detailliert beschrieben.

Es zeigen:
- Fig. 1: eine Schnittansicht einer Beleuchtungsvorrichtung gemäß dem Stand der Technik;
- Fig. 2: eine Schnittansicht einer Ausführungsform einer erfindungsgemäßen Beleuchtungsvorrichtung;
- Fig. 3: eine Draufsicht auf die Beleuchtungsvorrichtung der Fig. 2;
- Fig. 4: eine perspektivische Ansicht einer Beleuchtungsvorrichtung nach dem Stand der Technik mit Lichtleiter-Einspeisung; und
- Fig. 5: eine Schnittansicht einer weiteren Ausführungsform einer erfindungsgemäßen Beleuchtungsvorrichtung, welche die Lichtleiter-Einspeisung gemäß Fig. 4 enthält.

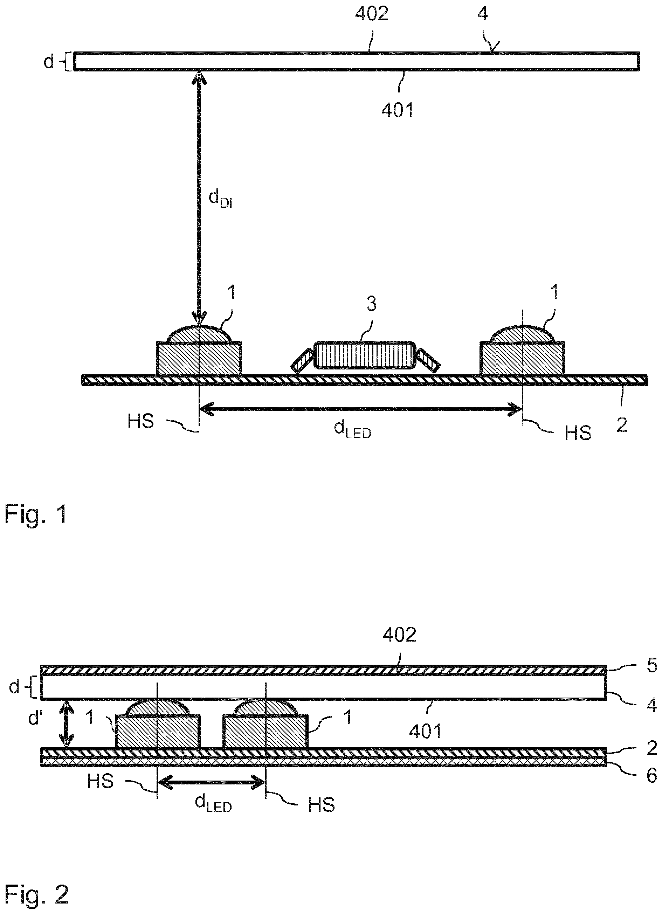

Fig. 1 zeigt in Schnittansicht eine an sich bekannte Kraftfahrzeug-Beleuchtungsvorrichtung, welche beispielsweise als Innenraumbeleuchtung eingesetzt werden kann. Die Beleuchtungsvorrichtung der Fig. 1, welche nur ausschnittsweise dargestellt ist, umfasst eine Vielzahl von LED-Einheiten 1, die bandförmig nebeneinander auf einer Leiterbahn 2 angeordnet sind und nach oben abstrahlen. In Fig. 1 sind dabei lediglich zwei der LED-Einheiten gezeigt. Zwischen benachbarten LED-Einheiten befinden sich integrierte Schaltungen 3, die zur Ansteuerung der einzelnen LED-Einheiten dienen. In der Ausführungsform der Fig. 1 sind die LED-Einheiten als RGB-LEDs mit einer roten, grünen und blauen LED ausgestaltet. Als Leiterbahn mit darauf angeordneten LEDs kann z.B. der an sich bekannte RGB-Streifen vom Typ LPD-8806 eingesetzt werden. Der Abstand d_{LED} zwischen benachbarten LED-Einheiten liegt in etwa bei 25 mm.

Vor den LED-Einheiten 1 ist ein plattenförmiger Diffusor 4 angeordnet, der das Licht der LED-Einheiten streut. Die Dicke des Diffusors ist mit d bezeichnet. Als Material für den Diffusor kann an sich bekanntes lichtstreuendes Material, wie Opal, Milchglas oder Kunststoff (Polyamid, Polycarbonat, Polymethylmethacrylat und dergleichen), eingesetzt werden. Der plattenförmige Diffusor 4 umfasst eine Unterseite 401 und eine Oberseite 402. Die flächige Ausdehnung des Diffusors verläuft dabei senkrecht zu den Hauptstrahlrichtungen HS der LED-Einheiten 1. Bezogen auf diese Hauptstrahlrichtungen strahlen die jeweiligen LED-Einheiten symmetrisch ab.

In der Anordnung der Fig. 1 bildet die Oberseite 402 des Diffusors die Lichtaustrittsfläche der Beleuchtungsvorrichtung. Um in dieser Anordnung eine homogene Lichtverteilung auf dem Diffusor zu erreichen, sollte der Abstand d_{DI} der Unterseite des Diffusors von der Oberseite der LED-Einheiten das Doppelte des Abstands d_{LED} zwischen den LEDs betragen. Bei Verwendung von optimiertem dotiertem Diffusormaterial kann dieser Abstand gegebenenfalls auf 50% des Abstands d_{LED} verringert werden. Es ist somit immer sicherzustellen, dass ein ausreichender Abstand d_{DI} zwischen den LED-Einheiten und dem Diffusor vorhanden ist. Dies hat wiederum den Nachteil, dass für die Beleuchtungsvorrichtung ein großer Bauraum benötigt wird, der oftmals in einem Kraftfahrzeug nicht vorhanden ist. Insbesondere sind Bautiefen im Bereich von 50 mm, wie sie in der Beleuchtungsvorrichtung der Fig. 1 auftreten können, für Ambiente- oder Kontur-Beleuchtung im Kraftfahrzeuginnenraum nicht vorhanden.

Zur Lösung dieser Problematik wird eine Beleuchtungsvorrichtung verwendet, bei der - im Gegensatz zu herkömmlichen Beleuchtungsvorrichtungen - der Lichteintritt in den Diffusor in eine andere Richtung als der Lichtaustritt erfolgt. Fig. 2 zeigt im Schnitt eine Variante der erfindungsgemäßen Beleuchtungsvorrichtung. In Analogie zu Fig. 1 ist wiederum eine Vielzahl von LED-Einheiten 1 auf einer Leiterbahn 2 nebeneinander angeordnet. In einer bevorzugten Variante werden dabei RGB-LED-Einheiten vom Typ APA10x oder vom Typ WS281x bzw. deren technische Weiterentwickungen verwendet, die sehr kompakt aufgebaut sind. Jede dieser Einheiten umfasst zur Ansteuerung der darin vorgesehenen LEDs eine integrierte Schaltung, die nunmehr gemeinsam mit den LEDs in einem Gehäuse angeordnet ist. Es sind somit keine außerhalb der LED-Einheiten vorgesehenen integrierten Schaltungen vorhanden, wie dies im Stand der Technik gemäß Fig. 1 der Fall ist. Demzufolge kann der Abstand d_{LED} zwischen den einzelnen LEDs deutlich verringert werden. Dieser Abstand liegt in der Ausführungsform der Fig. 2 bei in etwa 7 mm.

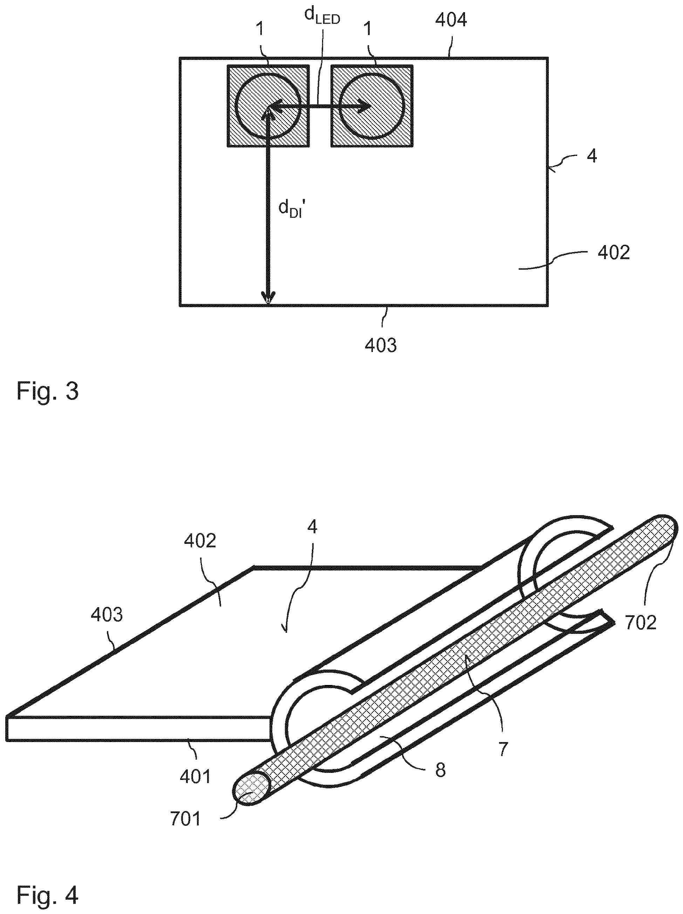

Im Unterschied zu Fig. 1 liegt in der Ausführungsform der Fig. 2 der Diffusor 4 an der Oberseite der einzelnen LED-Einheiten 1 an. Der Abstand d' zwischen der Unterseite des Diffusors 4 und der Leiterbahn 2 liegt lediglich bei etwa 2,5 mm. Um wiederum ein homogenes Erscheinungsbild des aus dem Diffusor austretenden Lichts zu schaffen, erfolgt der Lichtaustritt nunmehr nicht über die Oberseite 402 des Diffusors, sondern über eine Stirnseite 403 desselben, wie in der weiter unten beschriebenen Fig. 3 angedeutet ist. Aus Fig. 2 ist ferner ersichtlich, dass auf der Oberseite des Diffusors 4 ein optischer Reflektor 5 angebracht ist, der gegebenenfalls weggelassen werden kann. Das über die Unterseite 401 in den Diffusor eintretende Licht wird über Reflexionen im Diffusor hin zu seiner Stirnseite geleitet, wobei die Lichtverluste aufgrund der Verwendung des optischen Reflektors 5 gering sind. In der Ausführungsform der Fig. 2 ist ferner unter der Leiterbahn 2 eine Wärmeableitung 6 angebracht, welche eine ausreichende Kühlung der einzelnen LED-Einheiten sicherstellt. Die Wärmeableitung kann als ein geeigneter Kühlkörper ausgeführt sein.

Die Abmessungen des Diffusors 4 und die Anordnung der LED-Einheiten 1 werden aus der Draufsicht der Fig. 3 ersichtlich, wobei in dieser Figur aus Übersichtlichkeitsgründen die weiteren Bauteile und insbesondere der optische Reflektor 5 weggelassen wurden. Die Beleuchtungsvorrichtung der Fig. 3 ist dabei derart im Kraftfahrzeug verbaut, dass die einzige, für den Betrachter sichtbare Lichtaustrittsfläche die Stirnseite 403 des plattenförmigen Diffusors ist, d.h. das Licht tritt über einen Spalt entsprechend der Dicke d des Diffusors aus der Beleuchtungsvorrichtung aus. Die einzelnen LED-Einheiten sind entfernt von der Stirnseite 403 an der gegenüberliegenden Stirnseite 404 des Diffusors 4 angeordnet, so dass der Abstand d_{DI}' zwischen den LED-Einheiten 1 und der Lichtaustrittsfläche 403 groß wird. Hierdurch wird gewährleistet, dass ein homogener Lichtaustritt an der Stirnseite 403 erfolgt, ohne dass durch das Auge des Betrachters die einzelnen Lichtpunkte der LED-Einheiten aufgelöst werden können.

In der Ausführungsform der Fig. 3 ist der Abstand d_{DI}' in etwa doppelt so groß wie der Abstand d_{LED} der einzelnen LED-Einheiten zueinander, d.h. er liegt bei etwa 14 mm. Gegebenenfalls kann die Länge d_{DI}' auch geringer gewählt werden. Beispielsweise kann d_{DI}' auch bei 3,5 mm (d.h. halber Abstand zwischen den LEDs) liegen, sofern optimiertes Diffusormaterial verwendet wird. Die Dicke d des plattenförmigen Diffusors kann je nach Variante unterschiedlich gewählt werden und liegt beispielsweise zwischen 1 mm und 5 mm. Durch die Anordnung der LED-Einheiten 1 unmittelbar angrenzend an die Fläche 401 des Diffusors 4 sowie durch den Lichtaustritt über eine Stirnseite 403 können die Abmessungen der Beleuchtungsvorrichtung deutlich reduziert werden, wodurch deren Verwendung auch bei eingeschränktem Bauraum im Kraftfahrzeug, wie z.B. im Falle einer Interior-Beleuchtung, ermöglicht wird.

Der in Fig. 2 gezeigte optische Reflektor 5 muss nicht unbedingt direkt am Diffusor 4 anliegen, sondern er kann auch Bestandteil der Kraftfahrzeugverkleidung sein, in der der Diffusor eingebaut ist. Der optische Reflektor kann als dünne Folie ausgeführt sein, wobei mit unterschiedlichen Folienmaterialien unterschiedliche Helligkeiten und Spektralverschiebungen des Farbpunkts der LED-Einheiten erreicht werden können. Wenn der optische Reflektor ein Bestandteil der Verkleidung ist, kann dieser auf verschiedene Verkleidungsfarben und somit auf das gesamte Erscheinungsbild des Kraftfahrzeugs abgestimmt werden.

Fig. 4 zeigt in perspektivischer Ansicht eine an sich bekannte Kraftfahrzeug-Beleuchtungsvorrichtung, welche einen zylindrischen Lichtstab 7 umfasst. Über eine Einkoppelstelle 701 und gegebenenfalls über die weitere Einkoppelstelle 702 wird dabei Licht einer LED (nicht gezeigt) in den Stab eingespeist. Dies führt zu einer Lichtleitung im Lichtstab 7, so dass dieser Licht entlang seiner Längsachse abgibt. Der Lichtstab befindet sich dabei in einer Aufnahme bzw. Nut 8, die sich wiederum an einen plattenförmigen Diffusor 4 anschließt. Das Licht des Lichtstabs, welches seitlich in den Diffusor 4 eintritt, wird über Reflexionen durch den Diffusor geleitet und tritt schließlich an dessen Stirnseite 403 aus. Die Stirnseite 403 bildet die einzige Lichtaustrittsfläche der Beleuchtungsvorrichtung.

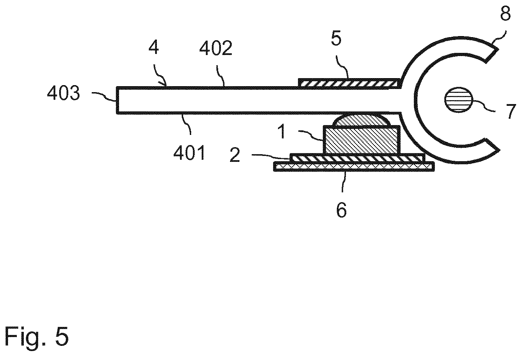

Die bekannte Beleuchtungsvorrichtung aus Fig. 4 kann nunmehr mit der erfindungsgemäßen Beleuchtungsvorrichtung kombiniert werden, wie anhand von Fig. 5 verdeutlicht ist. Diese Figur zeigt eine zweite Variante einer erfindungsgemäßen Beleuchtungsvorrichtung. Die Beleuchtungsvorrichtung ist dabei im Schnitt dargestellt und umfasst eine Vielzahl von LED-Einheiten 1, analog zur Beleuchtungsvorrichtung der Fig. 2. Die LED-Einheiten sind in der Schnittdarstellung der Fig. 5 senkrecht zur Blattrichtung hintereinander angeordnet. Die einzelnen LED-Einheiten liegen wiederum direkt an der Unterseite 401 des Diffusors 4 an. Das über die LED-Einheiten in den Diffusor eintretende Licht wird wie in der oben beschriebenen Ausführungsform der Fig. 2 zu der Lichtaustrittsfläche 403 geleitet. In Analogie zu Fig. 4 ist eine Aufnahme 8 für einen stabförmigen Lichtleiter 7 vorgesehen, der über (nicht gezeigte) LEDs an zumindest einer Einkoppelstelle mit Licht gespeist wird.

Zur Verminderung von Lichtverlusten ist in der Ausführungsform der Fig. 5 wiederum ein optischer Reflektor 5 auf der Oberseite 402 des Diffusors 4 vorgesehen. Dieser Reflektor erstreckt sich nunmehr jedoch lediglich in einem Bereich oberhalb der einzelnen LED-Einheiten 1. Ferner ist wiederum eine Wärmeleitung 6 auf der Unterseite der Leiterbahn 2 zur Kühlung der LED-Einheiten 1 angebracht. Gegebenenfalls können die LED-Einheiten auch diskret mit Leitungen miteinander verbunden sein.

In einer bevorzugten Variante der Ausführungsform der Fig. 5 ist die entsprechende (nicht gezeigte) Lichtquelle an der Einkoppelstelle 701 des Lichtstabs 7 über ein LIN-Modul an einen LIN-Bus im Kraftfahrzeug gekoppelt. Vorzugsweise befindet sich an dieser Stelle auch ein gemeinsames Verarbeitungsmodul für alle LED-Einheiten 1, wobei dieses Verarbeitungsmodul über eine elektrische Leitung mit der Leiterbahn 2 zum Datenaustausch mit den LED-Einheiten 1 verbunden ist und ferner auch an den LIN-Datenbus gekoppelt ist. Demzufolge kann die Kopplung an den LIN-Datenbus an einer einzelnen Stelle erfolgen, wodurch ein einfacher Aufbau der Beleuchtungsvorrichtung gewährleistet ist. Über den LIN-Bus werden dabei Steuerbefehle zur Ansteuerung der LED-Einheiten 1 und der Lichtquellen am Lichtstab 7 von einem Steuergerät des Kraftfahrzeugs an die Beleuchtungsvorrichtung übertragen. In einer bevorzugten Variante erfolgt der Datenaustausch zwischen dem genannten Verarbeitungsmodul und den LED-Einheiten über einen internen Datenbus in der Form eines SPI-Busses, wie bereits oben beschrieben wurde.

Die im Vorangegangenen beschriebenen Ausführungsformen der Erfindung weisen eine Reihe von Vorteilen auf. Insbesondere wird eine Beleuchtungsvorrichtung für ein Kraftfahrzeug mit einem kompakten Aufbau geschaffen, da ein entsprechender Diffusor direkt bzw. mit geringem Abstand vor LED-Einheiten platziert werden kann. Über die entsprechende Ansteuerung der LED-Einheiten können ferner Lichtanimationen in unterschiedlicher Ausgestaltung erzeugt werden. Gegebenenfalls kann in der Beleuchtungsvorrichtung als weiteres Leuchtmittel ein Lichtstab vorgesehen sein, mit dem ebenfalls Licht in den Diffusor geleitet wird. Auf diese Weise können weitere Lichteffekte erreicht werden. Insbesondere kann durch den Lichtstab eine gleichmäßige Lichtverteilung, z.B. in der Farbe Weiß, oder eine Basis-Lichtanimation erzeugt werden, wobei bedarfsweise, beispielsweise je nach Bedienung bzw. gekoppelt an bestimmte Ereignisse im Fahrzeug, eine Lichtanimation mittels unterschiedlicher Farben über entsprechende Ansteuerung der LED-Einheiten hinzugeschaltet werden kann.

### Bezugszeichenliste

- 1: LED-Einheit
- 2: Leiterbahn
- 3: integrierte Schaltung
- 4: Diffusor
- 401: Unterseite des Diffusors
- 402: Oberseite des Diffusors
- 403, 404: Stirnflächen des Diffusors
- 5: optischer Reflektor
- 6: Wärmeableitung
- 7: Lichtstab
- 701, 702: Einkoppelstellen des Lichtstabs
- 8: Aufnahme
- d: Dicke des Diffusors
- d_{DI}: Abstand zwischen LED-Einheiten und Unterseite des Diffusors
- d': Abstand zwischen Leiterbahn und Unterseite des Diffusors
- d_{DI}': Abstand zwischen LED-Einheiten und Stirnfläche des Diffusors
- d_{LED}: Abstand zwischen den LED-Einheiten
- HS: Hauptstrahlrichtung der LED-Einheiten

## Patentansprüche

1. Beleuchtungsvorrichtung für ein Kraftfahrzeug, umfassend
eine oder mehrere LED-Einheiten (1), wobei eine jeweilige LED-Einheit (1) eine oder mehrere LEDs umfasst;
einen plattenförmigen Diffusor (4) aus lichtstreuendem Material mit einer ersten und zweiten Begrenzungsfläche (401,402);
wobei eine Stirnfläche des Diffusors (4), die zwischen der ersten und zweiten Begrenzungsfläche (401, 402) vorgesehen ist, die für einen Betrachter sichtbare Lichtaustrittsfläche (403) der Beleuchtungsvorrichtung bildet;
die LED-Einheit (1) oder LED-Einheiten (1) benachbart zur ersten Begrenzungsfläche (401) angeordnet sind und im Betrieb in Richtung hin zu der ersten Begrenzungsfläche (401) Licht abstrahlen, welches über die erste Begrenzungsfläche (401) in den Diffusor (4) eintritt;
der Diffusor (4) derart ausgestaltet und angeordnet ist, dass zumindest ein Teil des über die erste Begrenzungsfläche (401) eintretenden Lichts der LED-Einheit (1) oder LED-Einheiten (1) im Diffusor (4) bis zu der Lichtaustrittsfläche (403) geleitet wird und dort aus der Beleuchtungsvorrichtung austritt.

2. Beleuchtungsvorrichtung nach Anspruch 1, **dadurch gekennzeichnet, dass** die LED-Einheit (1) oder LED-Einheiten (1) einen Abstand von 10 mm oder weniger von der ersten Begrenzungsfläche (401) aufweisen und insbesondere an der ersten Begrenzungsfläche (401) anliegen.

3. Beleuchtungsvorrichtung nach einem der vorhergehenden Ansprüche, **dadurch gekennzeichnet, dass** für die LED-Einheit (1) oder LED-Einheiten (1) eine Hauptstrahlrichtung (HS) vorgegeben ist, bezogen auf welche die jeweilige LED-Einheit (1) symmetrisch Licht abstrahlt, wobei die Hauptstrahlrichtung (HS) einer jeweiligen LED-Einheit (1) vorzugsweise im Wesentlichen senkrecht zu der ersten Begrenzungsfläche (401) am Ort des Eintritts des Lichts der jeweiligen LED-Einheit (1) in die erste Begrenzungsfläche (401) ist.

4. Beleuchtungsvorrichtung nach einem der vorhergehenden Ansprüche, **dadurch gekennzeichnet, dass** der Diffusor (4) eine weitere Stirnfläche (404) aufweist, welche an einem entfernt zu der Lichtaustrittsfläche (403) liegenden Ende des Diffusors (4) angeordnet ist, wobei die LED-Einheit (1) oder LED-Einheiten (1) benachbart zu der weiteren Stirnfläche (404) angeordnet sind.

5. Beleuchtungsvorrichtung nach einem der vorhergehenden Ansprüche, **dadurch gekennzeichnet, dass** der Diffusor (4) einen Streifen darstellt und die Lichtaustrittsfläche (403) eine Längskante des Steifens ist, wobei die Beleuchtungsvorrichtung vorzugsweise mehrere LED-Einheiten (1) umfasst, welche in Richtung der Längskante des Steifens nebeneinander angeordnet sind.

6. Beleuchtungsvorrichtung nach Anspruch 5, **dadurch gekennzeichnet, dass** die Breite des Streifens zwischen 40% und 250%, insbesondere zwischen 50% und 200%, des Abstands zwischen benachbarten LED-Einheiten (1) liegt.

7. Beleuchtungsvorrichtung nach einem der vorhergehenden Ansprüche, **dadurch gekennzeichnet, dass** an der zweiten Begrenzungsfläche (402) des Diffusors (4) zumindest in dem Bereich, welcher der oder den LED-Einheiten (1) gegenüber liegt, ein optischer Reflektor (5) angeordnet ist.

8. Beleuchtungsvorrichtung nach Anspruch 7, **dadurch gekennzeichnet, dass** der optische Reflektor (5) ein Teil einer Verkleidung des Kraftfahrzeugs ist.

9. Beleuchtungsvorrichtung nach einem der vorhergehenden Ansprüche, **dadurch gekennzeichnet, dass** die Beleuchtungsvorrichtung eine Innenraumbeleuchtung im Kraftfahrzeug oder eine Außenbeleuchtung an der Außenseite des Kraftfahrzeugs ist.

10. Beleuchtungsvorrichtung nach einem der vorhergehenden Ansprüche, **dadurch gekennzeichnet, dass** die LED-Einheit (1) oder LED-Einheiten (1) auf einer Wärmeableitung (6) angeordnet sind.

11. Beleuchtungsvorrichtung nach einem der vorhergehenden Ansprüche, **dadurch gekennzeichnet, dass** die Beleuchtungsvorrichtung mehrere LED-Einheiten (1) umfasst, welche auf einer gemeinsamen Leiterbahn (2) angeordnet sind.

12. Beleuchtungsvorrichtung nach einem der vorhergehenden Ansprüche, **dadurch gekennzeichnet, dass** die Beleuchtungsvorrichtung ferner einen stabförmigen Lichtleiter (7) umfasst, wobei an einem oder beiden Enden (701, 702) des stabförmigen Lichtleiters (7) eine oder mehrere Lichtquellen zur Einspeisung von Licht in den stabförmigen Lichtleiter (7) vorgesehen sind, wobei das eingespeiste Licht entlang der Längsrichtung des stabförmigen Lichtleiters (7) aus diesem austritt und der stabförmige Lichtleiter (7) derart am Diffusor (4) angeordnet ist, dass das aus ihm austretende Licht in den Diffusor (4) eintritt und dort zur Lichtaustrittsfläche (403) geleitet wird.

13. Beleuchtungsvorrichtung nach Anspruch 12, **dadurch gekennzeichnet, dass** zumindest eine Lichtquelle, welche an einem Ende des stabförmigen Lichtleiters (7) Licht einspeist, über ein Schnittstellen-Modul an einen Kraftfahrzeug-Datenbus anbindbar ist, wobei sich am Ort des Schnittstellen-Moduls ferner ein Verarbeitungsmodul befindet, welches mit der oder den LED-Einheiten (1) elektrisch verbunden ist und ebenfalls an den Kraftfahrzeug-Datenbus anbindbar ist.

14. Beleuchtungsvorrichtung nach einem der vorhergehenden Ansprüche, **dadurch gekennzeichnet, dass** die LED-Einheit (1) oder LED-Einheiten (1) jeweils eine integriere Schaltung zur Ansteuerung des oder der LEDs der jeweiligen LED-Einheit (1) umfassen.

15. Beleuchtungsvorrichtung nach Anspruch 14, **dadurch gekennzeichnet, dass** die Beleuchtungsvorrichtung mehrere LED-Einheiten (1) umfasst, welche über einen internen Datenbus mit einem gemeinsamen Verarbeitungsmodul gekoppelt sind, wobei das Verarbeitungsmodul zur Kopplung an einen Kraftfahrzeug-Datenbus eingerichtet ist, um erste digitale Steuerbefehle zum Betrieb der Beleuchtungsvorrichtung von dem Kraftfahrzeug-Datenbus zu empfangen und als zweite digitale Steuerbefehle auf den internen Datenbus zu geben, und wobei die LED-Einheiten (1) dazu eingerichtet sind, ihren LEDs Strom aus einer Spannungsversorgung basierend auf den zweiten digitalen Steuerbefehlen auf dem internen Datenbus mittels der integrierten Schaltungen zuzuführen, wobei der interne Datenbus vorzugsweise ein SPI-Bus oder ein differentieller Datenbus ist.

16. Kraftfahrzeug, umfassend eine oder mehrere Beleuchtungsvorrichtungen nach einem der vorhergehenden Ansprüche.

## Claims

1. Lighting apparatus for a motor vehicle, comprising one or more LED units (1), wherein a respective LED unit (1) comprises one or more LEDs;
a plate-shaped diffuser (4) consisting of light-scattering material and having a first and second delimiting face (401, 402);
wherein
an end face of the diffuser (4) which is provided between the first delimiting face (401) and the second delimiting face (402) forms the light emergence face (403) of the lighting apparatus that is visible to a user;
the LED unit (1) or LED units (1) are arranged adjacent to the first delimiting face (401) and, during operation, emit light in the direction of the first delimiting face (401), said light entering into the diffuser (4) via the first delimiting face (401);
the diffuser (4) is configured and arranged in such a way that at least some of the light of the LED unit (1) or LED units (1) entering via the first delimiting face (401) is guided in the diffuser (4) to the light emergence face (403) and it emerges from the lighting apparatus there.

2. Lighting apparatus according to Claim 1, **characterized in that** the LED unit (1) or LED units (1) have a distance of 10 mm or less from the first delimiting face (401) and, in particular, abut against the first delimiting face (401).

3. Lighting apparatus according to either of the preceding claims, **characterized in that** a principal emission direction (HS) is predetermined for the LED unit (1) or LED units (1), the respective LED unit (1) emitting light symmetrically in respect of said principal emission direction, wherein the principal emission direction (HS) of a respective LED unit (1) is preferably substantially perpendicular to the first delimiting face (401) at the location where the light of the respective LED unit (1) enters into the first delimiting face (401).

4. Lighting apparatus according to any one of the preceding claims, **characterized in that** the diffuser (4) has a further end face (404) which is arranged at an end of the diffuser (4) that is distant from the light emergence face (403), wherein the LED unit (1) or LED units (1) are arranged adjacent to the further end face (404).

5. Lighting apparatus according to any one of the preceding claims, **characterized in that** the diffuser (4) represents a strip and the light emergence face (403) is a longitudinal edge of the strip, wherein the lighting apparatus preferably comprises a plurality of LED units (1) that are arranged next to one another in the direction of the longitudinal edge of the strip.

6. Lighting apparatus according to Claim 5, **characterized in that** the width of the strip lies between 40% and 250%, in particular between 50% and 200%, of the distance between adjacent LED units (1) .

7. Lighting apparatus according to any one of the preceding claims, **characterized in that** an optical reflector (5) is arranged at the second delimiting face (402) of the diffuser (4), at least in the region which lies opposite the LED unit or units (1) .

8. Lighting apparatus according to Claim 7, **characterized in that** the optical reflector (5) is part of a trim of the motor vehicle.

9. Lighting apparatus according to any one of the preceding claims, **characterized in that** the lighting apparatus is an interior lighting in the motor vehicle or an exterior lighting on the outside of the motor vehicle.

10. Lighting apparatus according to any one of the preceding claims, **characterized in that** the LED unit (1) or LED units (1) are arranged on a heatsink (6).

11. Lighting apparatus according to any one of the preceding claims, **characterized in that** the lighting apparatus comprises a plurality of LED units (1) which are arranged on a common conductor track (2).

12. Lighting apparatus according to any one of the preceding claims, **characterized in that** the lighting apparatus further comprises a rod-shaped light guide (7), wherein provision is made at one or both ends (701, 702) of the rod-shaped light guide (7) for one or more light sources for feeding light into the rod-shaped light guide (7), wherein the fed light emerges from the rod-shaped light guide (7) along the longitudinal direction of same and the rod-shaped light guide (7) is arranged on the diffuser (4) in such a way that the light emerging from said rod-shaped light guide enters into the diffuser (4) and it is guided there to the light emergence face (403) .

13. Lighting apparatus according to Claim 12, **characterized in that** at least one light source, which feeds light at one end of the rod-shaped light guide (7), is able to be connected to a motor vehicle data bus via an interface module, wherein, further, a processing module is situated at the location of the interface module, said processing module being electrically connected to the LED unit or units (1) and likewise being able to be connected to the motor vehicle data bus.

14. Lighting apparatus according to any one of the preceding claims, **characterized in that** the LED unit (1) or LED units (1) each comprise an integrated circuit for actuating the LED or LEDs of the respective LED unit (1).

15. Lighting apparatus according to Claim 14, **characterized in that** the lighting apparatus comprises a plurality of LED units (1) which are coupled to a common processing module by way of an internal data bus, wherein the processing module is configured to be coupled to a motor vehicle data bus in order to receive first digital control commands for operating the lighting apparatus from the motor vehicle data bus and to forward these to the internal data bus as second digital control commands, and wherein the LED units (1) are configured to feed power from a voltage supply to their LEDs on the basis of the second digital control commands on the internal data bus by means of the integrated circuits, wherein the internal data bus is preferably an SPI bus or a differential data bus.

16. Motor vehicle, comprising one or more lighting apparatuses according to any one of the preceding claims.

## Revendications

1. Dispositif d'éclairage pour un véhicule automobile, comprenant
une ou plusieurs unités à LED (1), dans lequel chaque unité à LED (1) comprend une ou plusieurs LED ;
un diffuseur en forme de plaque (4), constitué d'un matériau diffusant la lumière avec une première et une deuxième surface de délimitation (401, 402) ;
dans lequel
une face frontale du diffuseur (4), qui est disposée entre les première et deuxième surfaces de délimitation (401, 402), qui constitue la surface de sortie de lumière (403) du dispositif d'éclairage visible par un observateur ;
l'unité à LED (1) ou les unités à LED (1) sont adjacentes à la première surface de délimitation (401) et émettent, lors du fonctionnement, en direction de la première surface de délimitation (401), une lumière qui entre dans le diffuseur (4) par l'intermédiaire de la première surface de délimitation (401) ;
le diffuseur (4) est conçu et disposé de façon à ce qu'au moins une partie de la lumière de l'unité à LED (1) ou des unités à LED (1), qui entre par l'intermédiaire de la première surface de délimitation (401), soit guidée dans le diffuseur (4) jusqu'à la surface de sortie de lumière (403) et sorte du dispositif d'éclairage par l'intermédiaire de celle-ci.

2. Dispositif d'éclairage selon la revendication 1, **caractérisé en ce que** l'unité à LED (1) ou les unités à LED (1) présentent une distance de 10 mm ou moins par rapport à la première surface de délimitation (401) et, plus particulièrement, s'appuient contre la première surface de délimitation (401).

3. Dispositif d'éclairage selon l'une des revendications précédentes, **caractérisé en ce que**, pour l'unité à LED (1) ou les unités à LED (1), une direction de rayonnement principale (HS) est prédéfinie, selon laquelle l'unité à LED (1) respective émet symétriquement de la lumière, dans lequel la direction de rayonnement principale (HS) d'une unité à LED (1) respective est de préférence globalement perpendiculaire à la première surface de délimitation (401) à l'endroit de l'entrée de la lumière de l'unité à LED (1) respective dans la première surface de délimitation (401).

4. Dispositif d'éclairage selon l'une des revendications précédentes, **caractérisé en ce que** le diffuseur (4) comprend une face frontale supplémentaire (404) qui est disposée sur une extrémité du diffuseur (4) éloignée de la surface de sortie de lumière (403), dans lequel l'unité à LED (1) ou les unités à LED (1) sont disposées de manière adjacente à la face frontale supplémentaire (404) .

5. Dispositif d'éclairage selon l'une des revendications précédentes, **caractérisé en ce que** le diffuseur (4) représente une bande et la surface de sortie de lumière (403) est une arête longitudinale de la bande, dans lequel le dispositif d'éclairage comprend de préférence plusieurs unités à LED (1) qui sont disposées les unes à côté des autres dans la direction longitudinale de la bande.

6. Dispositif d'éclairage selon la revendication 5, **caractérisé en ce que** la largeur de la bande représente entre 40 % et 250 %, plus particulièrement entre 50 % et 200 % de la distance entre des unités à LED (1) adjacentes.

7. Dispositif d'éclairage selon l'une des revendications précédentes, **caractérisé en ce que**, sur la deuxième surface de délimitation (402) du diffuseur (4), est disposé, au moins dans la zone en face de l'unité ou des unités à LED (1), un réflecteur optique (5).

8. Dispositif d'éclairage selon la revendication 7, **caractérisé en ce que** le réflecteur optique (5) est une partie d'un carénage du véhicule automobile.

9. Dispositif d'éclairage selon l'une des revendications précédentes, **caractérisé en ce que** le dispositif d'éclairage est un éclairage intérieur dans le véhicule automobile ou un éclairage extérieur à l'extérieur du véhicule automobile.

10. Dispositif d'éclairage selon l'une des revendications précédentes, **caractérisé en ce que** l'unité à LED (1) ou les unités à LED (1) sont disposées sur un dispositif de dissipation de chaleur (6).

11. Dispositif d'éclairage selon l'une des revendications précédentes, **caractérisé en ce que** le dispositif d'éclairage comprend plusieurs unités à LED (1) qui sont disposées sur une bande conductrice commune (2) .

12. Dispositif d'éclairage selon l'une des revendications précédentes, **caractérisé en ce que** le dispositif d'éclairage comprend en outre une fibre optique en forme de tige (7), dans lequel, à une ou aux deux extrémités (701, 702) de la fibre optique en forme de tige (7), sont disposées une ou plusieurs sources de lumière permettant d'introduire de la lumière dans la fibre optique en forme de tige (7), dans lequel la lumière introduite sort de la fibre optique en forme de tige (7) le long de la direction longitudinale de celle-ci et la fibre optique en forme de tige (7) est disposée sur le diffuseur (4) de façon à ce que la lumière qui en sort entre dans le diffuseur (4) et y soit guidé vers la surface de sortie de lumière (403).

13. Dispositif d'éclairage selon la revendication 12, **caractérisé en ce qu'**au moins une source de lumière, qui introduit de la lumière à une extrémité de la fibre optique en forme de tige (7), peut être connectée, par l'intermédiaire d'un module d'interface, à un bus de données du véhicule automobile, dans lequel, à l'endroit du module d'interface, se trouve en outre un module de traitement qui est relié électriquement à l'unité ou les unités à LED (1) et qui peut également être connecté au bus de données du véhicule automobile.

14. Dispositif d'éclairage selon l'une des revendications précédentes, **caractérisé en ce que** l'unité à LED (1) ou les unités à LED (1) comprennent chacune un circuit intégré pour le contrôle de la ou des LED de chaque unité à LED (1).

15. Dispositif d'éclairage selon la revendication 14, **caractérisé en ce que** le dispositif d'éclairage comprend plusieurs unités à LED (1) qui sont couplées, par l'intermédiaire d'un bus de données interne, à un module de traitement commun, dans lequel le module de traitement est conçu pour être couplé à un bus de données du véhicule automobile, afin de recevoir des premières instructions de commande numériques pour le fonctionnement du dispositif d'éclairage, en provenance du bus de données du véhicule automobile et pour les envoyer, en tant que deuxièmes instructions de commande numériques, au bus interne, et dans lequel les unités à LED (1) sont conçues pour alimenter leurs LED en courant à l'aide d'une alimentation en tension sur la base des deuxièmes instructions de commande numériques sur le bus de données interne au moyen des circuits intégrés, dans lequel le bus de données interne est de préférence un bus SPI ou un bus de données différentiel.

16. Véhicule automobile, comprenant un ou plusieurs dispositifs d'éclairage selon l'une des revendications précédentes.
